# EUROPEAN PATENT APPLICATION

(11) **EP 4 277 308 A1**
(43) Date of publication of application: **15.11.2023**
(21) Application number: 21917195.6
(22) Date of filing: 23.11.2021
(51) Int. Cl.: H04W 4/20, H04W 4/70, H04W 72/04

(54) **COMMUNICATION METHOD AND APPARATUS, DEVICE, AND READABLE STORAGE MEDIUM**

(30) Priority: 11.01.2021 CN 202110031350
(71) Applicant: Datang Mobile Communications Equipment Co., Ltd., Beijing 100085 (CN)
(72) Inventor: KANG, Shaoli, Beijing 100085 (CN); MIAO, Deshan, Beijing 100085 (CN); XU, Hui, Beijing 100085 (CN); WANG, Hucheng, Beijing 100085 (CN); SUN, Shaohui, Beijing 100085 (CN); WANG, Yingmin, Beijing 100085 (CN)
(74) Representative: Maiwald GmbH
(86) International application number: PCT/CN2021/132369
(87) International publication number: WO 2022/148154

(57) **Abstract**

A communication method, a device, an apparatus and a readable storage medium are provided. The communication method includes: receiving first information transmitted by a first UE; and when determining that the first UE supports a T2T service, processing the first information as follows: when the first information needs to be processed through a control plane, transmitting the first information to a second LTE through a control plane channel; and when the first information needs to be processed through a data plane, transmitting the first information to the second UE through an inter-satellite channel.

## Description

### CROSS-REFERENCE TO RELATED APPLICATION

This application claims a priority of the Chinese patent application No.202110031350.4 filed in China on January 11, 2021, which is incorporated herein by reference in its entirety.

### TECHNICAL FIELD

The present disclosure relates to the field of communication technology, in particular to a communication method, a device, an apparatus and a readable storage medium.

### BACKGROUND

For a Low Earth Orbit (LEO) satellite communication system using on-satellite processing and an inter-satellite link, in order to meet some special requirements such as decreasing a time delay or confidentiality, it needs to support some services not managed by a core network, i.e., Terminal to Terminal (T2T) services.

Currently, common T2T services include voice service, short message service, multimedia message service, etc. These services may occur at a user level ("user T2T" for short), or at a beam level to which a user belongs ("beam T2T" for short). For example, when there are two users in one beam, i.e., LTE1 for which a common service is provided and UE2 for which the T2T service is provided, the T2T service of LTE2 is called as "user T2T". When only the T2T service is provided for all users in one beam, the T2T service is called as "beam T2T". In special cases, when one beam serves only one user, it is also called as "beam T2T".

In related art, there is currently no scheme about how to provide the beam T2T service for the LEO satellite communication system using a 5^{th}-Generation (5G) satellite communication system.

### SUMMARY

An object of the present disclosure is to provide a communication method, a device, an apparatus and a readable storage medium, so as to provide the beam T2T service in the LEO satellite communication system using the 5G satellite communication system.

In one aspect, the present disclosure provides in some embodiments a communication method performed by a network device of a first satellite node, including: receiving first information transmitted by a first User Equipment (UE); and when determining that the first UE supports a T2T service, processing the first information as follows: when the first information needs to be processed through a control plane, transmitting the first information to a second UE through a control plane channel; and when the first information needs to be processed through a data plane, transmitting the first information to the second UE through an inter-satellite channel.

Optionally, prior to processing the first information, the communication method further includes: obtaining subscription information about the first UE, the subscription information being used to indicate a type of T2T service direct communication supported by the first UE; and determining whether the first UE supports the T2T service in accordance with the subscription information.

Optionally, the transmitting the first information to the second LTE through the control plane channel when the first information needs to be processed through the control plane includes: receiving information about the control plane channel transmitted by a network device of a core network; and transmitting the first information to the network device of the core network in accordance with the information about the control plane channel, to enable the network device of the core network to transmit the first information to a network device of a second satellite node and enable the network device of the second satellite node to transmit the first information to the second LTE. The second LTE is located under a beam of the second satellite node.

Optionally, the transmitting the first information to the second LTE through the inter-satellite channel when the first information needs to be processed through the data plane includes: obtaining a routing policy configured by a network device of a core network; determining an intermediate inter-satellite channel in accordance with the routing policy, the intermediate inter-satellite channel including the network device of the first satellite node, a network device of a target satellite node and a network device of a second satellite node, or including the network device of the first satellite node and the network device of the second satellite node, the second LTE being located under a beam of the second satellite node; and transmitting the first information to the second UE through the intermediate inter-satellite channel.

Optionally, the transmitting the first information to the second LTE through the inter-satellite channel when the first information needs to be processed through the data plane includes: establishing an intermediate inter-satellite channel for the first LTE in accordance with position information of the second LTE; and transmitting the first information to the second UE through the intermediate inter-satellite channel, the intermediate inter-satellite channel including the network device of the first satellite node, a network device of a target satellite node and a network device of a second satellite node, or including the network device of the first satellite node and the network device of the second satellite node, and the second LTE being located under a beam of the second satellite node.

Optionally, the intermediate inter-satellite channel is a user-level inter-satellite channel or the intermediate inter-satellite channel is a beam-level inter-satellite channel.

Optionally, the communication method further includes transmitting second information, and the second information is used to indicate that the network device of the first satellite node supports a cell-level T2T service or a beam-level T2T service.

Optionally, a control plane protocol structure of the network device of the first satellite node includes any one of: a Physical layer (PHY), a Medium Access Control (MAC) and Radio Link Control (RLC); the PHY, the MAC, the RLC and a Packet Data Convergence Protocol (PDCP); or the PHY, the MAC, the RLC, the PDCP, and Radio Resource Control (RRC). A data plane protocol structure of the network device of the first satellite node includes any one of: the PHY, the MAC and the RLC; the PHY, the MAC, the RLC and the PDCP; or the PHY, the MAC, the RLC, the PDCP, and a Service Data Adaptation Protocol (SDAP).

In another aspect, the present disclosure provides in some embodiments a communication method performed by a network device of a core network, including: receiving first information transmitted by a network device of a first satellite node, the first information being transmitted by the network device of the first satellite node to the network device of the core network when the network device of the first satellite node determining that a first UE supports a T2T service and the first information needs to be processed through a control plane; and transmitting the first information to a second LTE.

Optionally, the communication method further includes one or more of: receiving subscription information transmitted by the first LTE, the subscription information being used to indicate a type of T2T service direct communication supported by the first UE; transmitting information about a control plane channel to the network device of the first satellite node and the first LTE; and transmitting a routing policy to the network device of the first satellite node.

In yet another aspect, the present disclosure provides in some embodiments a communication method performed by a first UE, including transmitting first information to a network device of a first satellite node, the first information being used to enable the network device of the first satellite node to process the first information as follows when the network device of the first satellite node determines that the first UE supports a T2T service: when the first information needs to be processed through a control plane, transmitting the first information to a second LTE through a control plane channel; and when the first information needs to be processed through a data plane, transmitting the first information to the second LTE through an inter-satellite channel.

Optionally, the communication channel further includes transmitting subscription information to the network device of the first satellite node and a network device of a core network, and the subscription information is used to indicate a type of T2T service direct communication supported by the first UE.

Optionally, the communication method further includes receiving second information transmitted by the network device of the first satellite node, and the second information is used to indicate that the network device of the first satellite node supports a cell-level T2T service or a beam-level T2T service.

Optionally, the communication method further includes transmitting third information to the second UE, and the third information is used to indicate at least one of a ciphering and deciphering method, an integrity protection and integrity verification method, or a header compression and decompression method in a PDCP functional entity of the first UE.

Optionally, RLC of the first UE is in an Unacknowledged Mode (UM); and/or a PDCP of the first UE supports a reordering function and an on-demand delivery function of a logic channel in the UM for a high layer.

In still yet another aspect, the present disclosure provides in some embodiments a communication method performed by a second LTE, including: receiving first information transmitted by a first UE, the first information being transmitted by a network device of a first satellite node through a control plane channel or an inter-satellite channel when the network device of the first satellite node determines that the first LTE supports a T2T service; and processing the first information.

Optionally, the communication method further includes receiving third information transmitted by the first UE, and the third information is used to indicate at least one of a ciphering and deciphering method, an integrity protection and integrity verification method, or a header compression and decompression method in a PDCP functional entity of the first UE.

Optionally, the processing the first information includes processing the first information in accordance with the third information.

Optionally, RLC of the second UE is in a UM; and/or a PDCP of the second UE supports a reordering function and an on-demand delivery function of a logic channel in the UM for a high layer.

In still yet another aspect, the present disclosure provides in some embodiments a communication device for a network device of a first satellite node, including a memory, a transceiver and a processor. The memory is configured to store therein a computer program. The transceiver is configured to receive and transmit data under the control of the processor. The processor is configured to read the computer program in the memory to: receive first information transmitted by a first UE; and when determining that the first LTE supports a T2T service, process the first information as follows: when the first information needs to be processed through a control plane, transmitting the first information to a second UE through a control plane channel; and when the first information needs to be processed through a data plane, transmitting the first information to the second UE through an inter-satellite channel.

Optionally, the processor is further configured to: obtain subscription information about the first UE, the subscription information being used to indicate a type of T2T service direct communication supported by the first UE; and determine whether the first LTE supports the T2T service in accordance with the subscription information.

Optionally, the processor is further configured to: receive information about the control plane channel transmitted by a network device of a core network; and transmit the first information to the network device of the core network in accordance with the information about the control plane channel, to enable the network device of the core network to transmit the first information to a network device of a second satellite node and enable the network device of the second satellite node to transmit the first information to the second UE. The second UE is located under a beam of the second satellite node.

Optionally, the processor is further configured to: obtain a routing policy configured by a network device of a core network; determine an intermediate inter-satellite channel in accordance with the routing policy, the intermediate inter-satellite channel including the network device of the first satellite node, a network device of a target satellite node and a network device of a second satellite node, or including the network device of the first satellite node and the network device of the second satellite node, the second UE being located under a beam of the second satellite node; and transmit the first information to the second UE through the intermediate inter-satellite channel.

Optionally, the processor is further configured to: establish an intermediate inter-satellite channel for the first LTE in accordance with position information of the second LTE; and transmit the first information to the second LTE through the intermediate inter-satellite channel, the intermediate inter-satellite channel including the network device of the first satellite node, a network device of a target satellite node and a network device of a second satellite node, or including the network device of the first satellite node and the network device of the second satellite node, and the second UE being located under a beam of the second satellite node.

Optionally, the intermediate inter-satellite channel is a user-level inter-satellite channel or the intermediate inter-satellite channel is a beam-level inter-satellite channel.

Optionally, the processor is further configured to transmit second information, and the second information is used to indicate that the network device of the first satellite node supports a cell-level T2T service or a beam-level T2T service.

Optionally, a control plane protocol structure of the network device of the first satellite node includes any one of a PHY, an MAC and RLC; the PHY, the MAC, the RLC and a PDCP; or the PHY, the MAC, the RLC, the PDCP, and RRC. A data plane protocol structure of the network device of the first satellite node includes any one of the PHY, the MAC and the RLC; the PHY, the MAC, the RLC and the PDCP; or the PHY, the MAC, the RLC, the PDCP, and an SDAP.

In still yet another aspect, the present disclosure provides in some embodiments a communication device for a network device of a core network, including a memory, a transceiver and a processor. The memory is configured to store therein a computer program. The transceiver is configured to receive and transmit data under the control of the processor. The processor is configured to read the computer program in the memory to: receive first information transmitted by a network device of a first satellite node, the first information being transmitted by the network device of the first satellite node to the network device of the core network when the network device of the first satellite node determining that a first UE supports a T2T service and the first information needs to be processed through a control plane; and transmit the first information to a second LTE.

Optionally, the processor is further configure to perform one or more of: receiving subscription information transmitted by the first LTE, the subscription information being used to indicate a type of T2T service direct communication supported by the first UE; transmitting information about a control plane channel to the network device of the first satellite node and the first LTE; and transmitting a routing policy to the network device of the first satellite node.

In still yet another aspect, the present disclosure provides in some embodiments a communication device for a first UE, including a memory, a transceiver and a processor. The memory is configured to store therein a computer program. The transceiver is configured to receive and transmit data under the control of the processor. The processor is configured to read the computer program in the memory to transmit first information to a network device of a first satellite node, the first information being used to enable the network device of the first satellite node to process the first information as follows when the network device of the first satellite node determines that the first UE supports a T2T service: when the first information needs to be processed through a control plane, transmitting the first information to a second LTE through a control plane channel; and when the first information needs to be processed through a data plane, transmitting the first information to the second LTE through an inter-satellite channel.

Optionally, the processor is further configured to transmit subscription information to the network device of the first satellite node and a network device of a core network, and the subscription information is used to indicate a type of T2T service direct communication supported by the first UE.

Optionally, the processor is further configured to receive second information transmitted by the network device of the first satellite node, and the second information is used to indicate that the network device of the first satellite node supports a cell-level T2T service or a beam-level T2T service.

Optionally, the processor is further configured to transmit third information to the second UE, and the third information is used to indicate at least one of a ciphering and deciphering method, an integrity protection and integrity verification method, or a header compression and decompression method in a PDCP functional entity of the first UE.

Optionally, RLC of the first UE is in a UM; and/or a PDCP of the first LTE supports a reordering function and an on-demand delivery function of a logic channel in the UM for a high layer.

In still yet another aspect, the present disclosure provides in some embodiments a communication device for a second LTE, including a memory, a transceiver and a processor. The memory is configured to store therein a computer program. The transceiver is configured to receive and transmit data under the control of the processor. The processor is configured to read the computer program in the memory to: receive first information transmitted by a first LTE, the first information being transmitted by a network device of a first satellite node through a control plane channel or an inter-satellite channel when the network device of the first satellite node determines that the first LTE supports a T2T service; and process the first information.

Optionally, the processor is further configured to receive third information transmitted by the first UE, and the third information is used to indicate at least one of a ciphering and deciphering method, an integrity protection and integrity verification method, or a header compression and decompression method in a PDCP functional entity of the first UE.

Optionally, the processor is further configured to process the first information in accordance with the third information.

Optionally, RLC of the second UE is in a UM; and/or a PDCP of the second UE supports a reordering function and an on-demand delivery function of a logic channel in the UM for a high layer.

In still yet another aspect, the present disclosure provides in some embodiments a communication device for a network device of a first satellite node, including: a first reception unit configured to receive first information transmitted by a first UE; and a first processing unit configured to, when determining that the first UE supports a T2T service, process the first information as follows: when the first information needs to be processed through a control plane, transmitting the first information to a second UE through a control plane channel; and when the first information needs to be processed through a data plane, transmitting the first information to the second UE through an inter-satellite channel.

Optionally, the communication device further includes: a first obtaining unit configured to obtain subscription information about the first LTE, the subscription information being used to indicate a type of T2T service direct communication supported by the first UE; and a first determination unit configured to determine whether the first LTE supports the T2T service in accordance with the subscription information.

Optionally, the first processing unit includes: a first reception sub-module configured to receive information about the control plane channel transmitted by a network device of a core network; and a first processing sub-module configured to transmit the first information to the network device of the core network in accordance with the information about the control plane channel, to enable the network device of the core network to transmit the first information to a network device of a second satellite node and enable the network device of the second satellite node to transmit the first information to the second UE. The second UE is located under a beam of the second satellite node.

Optionally, the first processing unit includes: a first obtaining sub-module configured to obtain a routing policy configured by a network device of a core network; a first determination sub-module configured to determine an intermediate inter-satellite channel in accordance with the routing policy, the intermediate inter-satellite channel including the network device of the first satellite node, a network device of a target satellite node and a network device of a second satellite node, or including the network device of the first satellite node and the network device of the second satellite node, the second UE being located under a beam of the second satellite node; and a first transmission sub-module configured to transmit the first information to the second UE through the intermediate inter-satellite channel.

Optionally, the first processing unit includes: a first establishment sub-module configured to establish an intermediate inter-satellite channel for the first UE in accordance with position information of the second LTE; and a second transmission sub-module configured to transmit the first information to the second UE through the intermediate inter-satellite channel, the intermediate inter-satellite channel including the network device of the first satellite node, a network device of a target satellite node and a network device of a second satellite node, or including the network device of the first satellite node and the network device of the second satellite node, and the second UE being located under a beam of the second satellite node.

Optionally, the intermediate inter-satellite channel is a user-level inter-satellite channel or the intermediate inter-satellite channel is a beam-level inter-satellite channel.

Optionally, the communication device further includes a first transmission unit configured to transmit second information, and the second information is used to indicate that the network device of the first satellite node supports a cell-level T2T service or a beam-level T2T service.

Optionally, a control plane protocol structure of the network device of the first satellite node includes any one of a PHY, an MAC and RLC; the PHY, the MAC, the RLC and a PDCP; or the PHY, the MAC, the RLC, the PDCP, and RRC. A data plane protocol structure of the network device of the first satellite node includes any one of the PHY, the MAC and the RLC; the PHY, the MAC, the RLC and the PDCP; or the PHY, the MAC, the RLC, the PDCP, and an SDAP.

In still yet another aspect, the present disclosure provides in some embodiments a communication device for a network device of a core network, including: a first reception unit configured to receive first information transmitted by a network device of a first satellite node, the first information being transmitted by the network device of the first satellite node to the network device of the core network when the network device of the first satellite node determining that a first LTE supports a T2T service and the first information needs to be processed through a control plane; and a first transmission unit configured to transmit the first information to a second LTE.

Optionally, the communication device further includes at least one of: a second reception unit configured to receive subscription information transmitted by the first UE, the subscription information being used to indicate a type of T2T service direct communication supported by the first LTE; a second transmission unit configured to transmit information about a control plane channel to the network device of the first satellite node and the first LTE; and a third transmission unit configured to transmit a routing policy to the network device of the first satellite node.

In still yet another aspect, the present disclosure provides in some embodiments a communication device for a first LTE, including a first transmission unit configured to transmit first information to a network device of a first satellite node, the first information being used to enable the network device of the first satellite node to process the first information as follows when the network device of the first satellite node determines that the first LTE supports a T2T service: when the first information needs to be processed through a control plane, transmitting the first information to a second UE through a control plane channel; and when the first information needs to be processed through a data plane, transmitting the first information to the second LTE through an inter-satellite channel.

Optionally, the communication device further includes a second transmission unit configured to transmit subscription information to the network device of the first satellite node and a network device of a core network, and the subscription information is used to indicate a type of T2T service direct communication supported by the first UE.

Optionally, the communication device further includes a first reception unit configured to receive second information transmitted by the network device of the first satellite node, and the second information is used to indicate that the network device of the first satellite node supports a cell-level T2T service or a beam-level T2T service.

Optionally, the communication device further includes a third transmission unit configured to transmit third information to the second UE, and the third information is used to indicate at least one of a ciphering and deciphering method, an integrity protection and integrity verification method, or a header compression and decompression method in a PDCP functional entity of the first UE.

Optionally, RLC of the first UE is in a UM; and/or a PDCP of the first LTE supports a reordering function and an on-demand delivery function of a logic channel in the UM for a high layer.

In still yet another aspect, the present disclosure provides in some embodiments a communication device for a second LTE, including: a first reception unit configured to receive first information transmitted by a first LTE, the first information being transmitted by a network device of a first satellite node through a control plane channel or an inter-satellite channel when the network device of the first satellite node determines that the first UE supports a T2T service; and a first processing unit configured to process the first information.

Optionally, the communication device further includes a second reception unit configured to receive third information transmitted by the first UE, and the third information is used to indicate at least one of a ciphering and deciphering method, an integrity protection and integrity verification method, or a header compression and decompression method in a PDCP functional entity of the first UE.

Optionally, the first processing unit is configured to process the first information in accordance with the third information.

Optionally, RLC of the second UE is in a UM; and/or a PDCP of the second UE supports a reordering function and an on-demand delivery function of a logic channel in the UM for a high layer.

In still yet another aspect, the present disclosure provides in some embodiments a readable storage medium storing therein a program. The program is used to be performed by a processor to implement the steps of the above-mentioned communication method.

According to the embodiments of the present disclosure, when the first information of the first UE is received and it determines that the first UE supports the T2T service, the first information is transmitted to the second LTE through the control plane channel or the inter-satellite channel. As a result, it is able to provide the beam T2T service in an LEO satellite communication system using a 5G satellite communication system.

### BRIEF DESCRIPTION OF THE DRAWINGS

Fig. 1 is a schematic view showing a service transmission mode in conventional T2T communication;
Fig. 2 is a schematic view showing a transmission mode of a T2T service in the related art;
Fig. 3 is a flow chart of a communication method according to an embodiment of the present disclosure;
Fig. 4 is another flow chart of the communication method according to an embodiment of the present disclosure;
Fig. 5 is yet another flow chart of the communication method according to an embodiment of the present disclosure;
Fig. 6 is still yet another flow chart of the communication method according to an embodiment of the present disclosure;
Fig. 7 is a schematic view showing a beam T2T protocol structure of a network device of a satellite node;
Fig. 8 is a schematic view showing a communication device according to an embodiment of the present disclosure;
Fig. 9 is another schematic view showing the communication device according to an embodiment of the present disclosure;
Fig. 10 is yet another schematic view showing the communication device according to an embodiment of the present disclosure;
Fig. 11 is still yet another schematic view showing the communication device according to an embodiment of the present disclosure;
Fig. 12 is still yet another schematic view showing the communication device according to an embodiment of the present disclosure;
Fig. 13 is still yet another schematic view showing the communication device according to an embodiment of the present disclosure;
Fig. 14 is still yet another schematic view showing the communication device according to an embodiment of the present disclosure; and
Fig. 15 is still yet another schematic view showing the communication device according to an embodiment of the present disclosure.

### DETAILED DESCRIPTION

The expression "and/or" in the embodiments of the present disclosure may be only used to describe the relationship between objects, and it may include three relationships. For example, "A and/or B" may represent that, there is only A, there are both A and B, and there is only B. Further, the symbol "/" usually refers to "or".

The expression "a plurality of" refers to two or more, and the other quantifiers are similar.

The present disclosure will be described hereinafter in a clear and complete manner in conjunction with the drawings and embodiments. Obviously, the following embodiments only relate to a part of, rather than all of, the embodiments of the present disclosure, and based on these embodiments, a person skilled in the art may, without any creative effort, obtain the other embodiments, which also fall within the scope of the present disclosure.

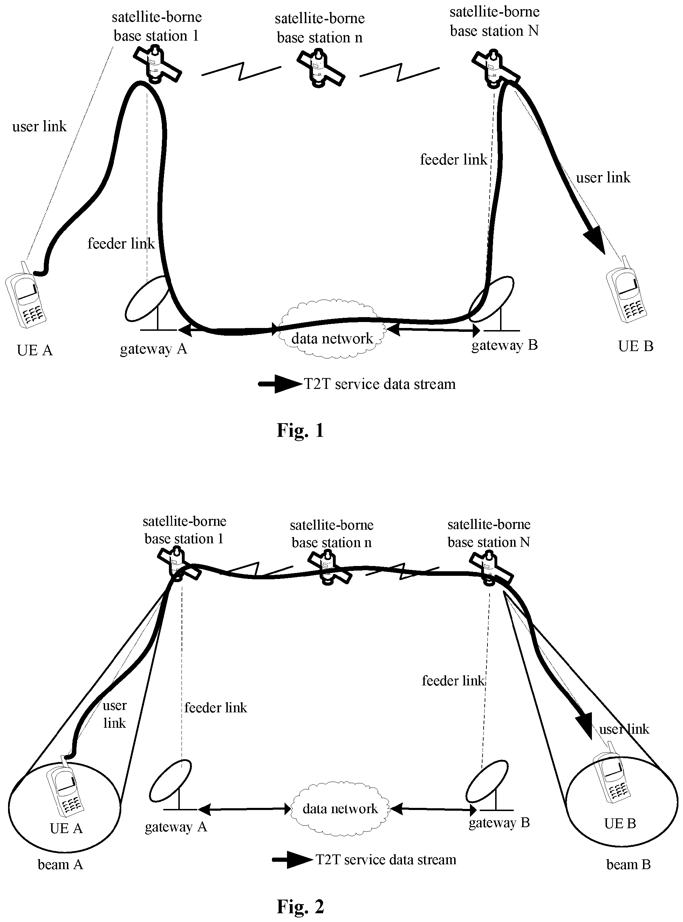

Fig. 1 shows a service transmission mode in conventional T2T communication. Usually, the service transmission mode in the T2T communication is "UE→satellite→core network->satellite->UE", and the core network is used for the management and charging of the service. Fig. 2 shows a T2T service transmission mode in the related art.

An object of the present disclosure is to provide a communication method and a communication device, so as to provide a beam T2T service in an LEO satellite communication system using a 5G satellite communication system.

The method and the device are provided on the basis of a same inventive concept, and a principle of the method for solving the problem is similar to that of the device, so the implementation of the device may refer to that of the method.

Schemes in the embodiments of the present disclosure may be applied to various systems, especially a 5G system, e.g., Global System of Mobile communication (GSM), Code Division Multiple Access (CDMA) system, Wideband Code Division Multiple Access (WCDMA) system, General Packet Radio Service (GPRS) system, Long Term Evolution (LTE) system, LTE Frequency Division Duplexing (FDD) system, LTE Time Division Duplexing (TDD) system, Long Term Evolution Advanced (LTE-A) system, Universal Mobile Telecommunication System (UMTS), Worldwide Interoperability for Microwave Access (WiMAX) system, or 5^{th}-Generation (5G) New Radio (NR) system. Each of these systems includes a terminal device and a network device. Each system further includes a core network part, e.g., an Evolved Packet System (EPS) or 5G system (SGS).

The terminal involved in the embodiments of the present disclosure may a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, remote terminal, access terminal, user terminal, user agent or user device, which will not be particularly defined herein.

The network device involved in the embodiments of the present disclosure may be a base station which includes a plurality of cells providing services for the terminal. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the GSM or CDMA system, a NodeB in the WCDMA system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Multi Input Multi Output (MIMO) transmission is performed between the network device and the terminal each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

A network device of a satellite node includes a satellite equipped with a base station function.

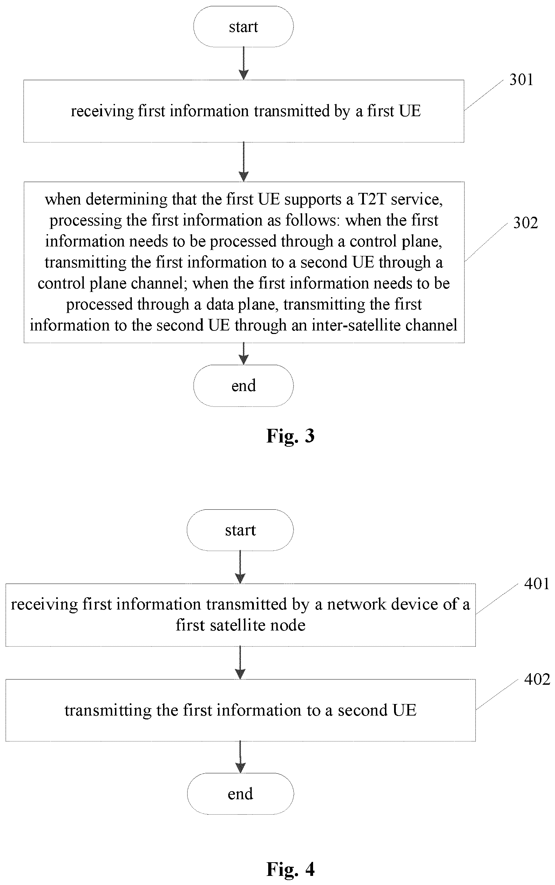

As shown in Fig. 3, the present disclosure provides in some embodiments a communication method performed by a network device of a first satellite node, which includes the following steps.

Step 301: receiving first information transmitted by a first UE.

The first information may be any information.

Step 302: when determining that the first UE supports a T2T service, processing the first information as follows: when the first information needs to be processed through a control plane, transmitting the first information to a second LTE through a control plane channel; and when the first information needs to be processed through a data plane, transmitting the first information to the second LTE through an inter-satellite channel.

The first LTE and the second LTE support not only the T2T service but also a non-T2T service.

In the embodiments of the present disclosure, as a basic feature of beam T2T, a user under one beam is directly connected to a user under another beam. The network device of the first satellite node may recognize whether the UE supports the T2T service, and establish a channel and perform resource allocation in accordance with the beam. Data at the data plane is transmitted through the inter-satellite channel rather than a core network. Data at the control plane is transmitted to the second LTE through the core network.

In actual use, prior to Step 302, in order to improve the communication efficiency, the network device of the first satellite node further obtains subscription information about the first UE, and determines whether the first UE supports the T2T service in accordance with the subscription information. The subscription information is used to indicate a type of T2T service direct communication supported by the first UE, and may include user-level or session-level T2T, beam T2T, etc. In this way, it is able for the network device of the first satellite node to identify the T2T service and the non-T2T service, thereby to select different routes in accordance with a service type (i.e., whether the service is the T2T service).

When the first information is processed through the control plane channel, the network device of the first satellite node receives information about the control plane channel, e.g., a route of the control plane channel, transmitted by a network device of a core network, and then transmits the first information to the network device of the core network in accordance with the information about the control plane channel, to enable the network device of the core network to transmit the first information to a network device of a second satellite node and enable the network device of the second satellite node to transmit the first information to the second LTE. The second LTE is located under a beam of the second satellite node.

When the first information is processed through the data plane, the network device of the first satellite node may determine a transmission channel in accordance with a routing policy obtained from the network device of the core network, or establish the transmission channel by itself.

To be specific, when the transmission channel is determined in accordance with the routing policy from the network device of the core network, the network device of the first satellite node may obtain the routing policy configured by the network device of the core network, and determines an intermediate inter-satellite channel in accordance with the routing policy. The intermediate inter-satellite channel includes the network device of the first satellite node, a network device of a target satellite node and a network device of a second satellite node, or includes the network device of the first satellite node and the network device of the second satellite node, and the second UE is located under a beam of the second satellite node. Then the network device of the first satellite node transmits the first information to the second UE through the intermediate inter-satellite channel.

To be specific, when the transmission channel is established by the network device of the first satellite node itself, the network device of the first satellite node may establish the intermediate inter-satellite channel for the first UE in accordance with position information of the second LTE, and then transmit the first information to the second UE through the intermediate inter-satellite channel. The intermediate inter-satellite channel includes the network device of the first satellite node, a network device of a target satellite node and a network device of a second satellite node, or includes the network device of the first satellite node and the network device of the second satellite node, and the second UE is located under a beam of the second satellite node.

In other words, in the embodiments of the present disclosure, the data plane channel includes the network device of the first satellite node and the network device of the second satellite node, or the control plane channel includes the network device of the first satellite node, the network device of the intermediate satellite node and the network device of the second satellite node. Hence, information may transmitted between the network device of the first satellite node and the network device of the second satellite node without any network device of the other satellite node.

When the transmission channel is established by the network device of the first satellite node itself, the established intermediate inter-satellite channel is a user-level inter-satellite channel or a beam-level (also called as base station-level) inter-satellite channel.

For the user-level inter-satellite channel, any two users communicate with each other through a T2T tunnel between the network devices of the satellite nodes. A tunnel identity assigned by the network device of the satellite node for the inter-satellite direct communication consists of a Base Station Identity (BS ID)/Internet Protocol (IP) address, and a per-UE tunnel ID. The network device of the satellite node currently serving the UE forwards a data packet in accordance with a tunnel for the user.

In other words, when the processing is implemented by the network device of the first satellite node, a communication procedure for the control panel needs to include a ground core network, i.e., it includes the first UE→the network device of the first satellite node→the core network→the network device of the second satellite node→the second LTE. A communication procedure for the data plane does not need to include the ground core network, i.e., it includes the first UE→the network device of the first satellite node→the network device of the second satellite node→the second UE, or the first UE→the network device of the first satellite node→the network device of the intermediate satellite node→the network device of the second satellite node→the second LTE.

In actual use, the network device of the first satellite node includes parts of or all of control plane functions. A control plane protocol structure of the network device of the first satellite node includes any one of a PHY, an MAC and RLC; the PHY, the MAC, the RLC and a PDCP; or the PHY, the MAC, the RLC, the PDCP, and RRC. A data plane protocol structure of the network device of the first satellite node includes any one of: the PHY, the MAC and the RLC; the PHY, the MAC, the RLC and the PDCP; or the PHY, the MAC, the RLC, the PDCP, and an SDAP.

According to the embodiments of the present disclosure, when the first information of the first UE is received and it determines that the first UE supports the T2T service, the first information is transmitted to the second LTE through the control plane or inter-satellite channel. As a result, it is able to provide the beam T2T service in an LEO satellite communication system using a 5G satellite communication system, thereby to reduce a communication delay between the UEs and manage the service, e.g., mange the confidentiality of the service.

In addition, the network device of the first satellite node further transmits the second information, and the second information is used to indicate that the network device of the first satellite node supports the cell-level T2T service or the beam-level T2T service. For example, the network device of the first satellite node may notify, through a broadcasting message, the UE that the network device of the first satellite node supports the cell-level T2T service or the beam-level T2T service.

As shown in Fig. 4, the present disclosure further provides in some embodiments a communication method performed by a network device of a core network, which includes: Step 401 of receiving first information transmitted by a network device of a first satellite node, the first information being transmitted by the network device of the first satellite node to the network device of the core network when the network device of the first satellite node determining that a first LTE supports a T2T service and the first information needs to be processed through a control plane; and Step 402 of transmitting the first information to a second LTE.

In an embodiment of the present disclosure, the communication method further includes one or more of: receiving, by the network device of the core network, subscription information transmitted by the first UE, the subscription information being used to indicate a type of T2T service direct communication supported by the first UE, which may include user-level or session level T2T, beam T2T; transmitting, by the network device of the core network, information about a control plane channel, e.g., a route of the control plane channel, to the network device of the first satellite node and the first LTE; and transmitting, by the network device of the core network, a routing policy to the network device of the first satellite node.

In the embodiments of the present disclosure, the network device of the core network has a complete core network function.

According to the embodiments of the present disclosure, when the first information of the first UE is received and it determines that the first UE supports the T2T service, the first information is transmitted to the second LTE through the control plane channel or the inter-satellite channel. As a result, it is able to provide the beam T2T service in an LEO satellite communication system using a 5G satellite communication system, thereby to reduce a communication delay between the UEs and manage the service, e.g., mange the confidentiality of the service.

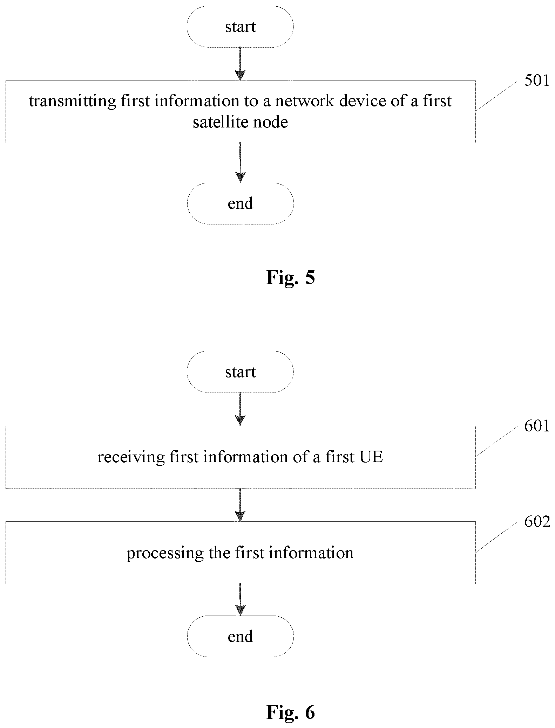

As shown in Fig. 5, the present disclosure further provides in some embodiments a communication method performed by a first UE, which includes Step 501 of transmitting first information to a network device of a first satellite node, the first information being used to enable the network device of the first satellite node to process the first information as follows when the network device of the first satellite node determines that the first LTE supports a T2T service: when the first information needs to be processed through a control plane, transmitting the first information to a second UE through a control plane channel; and when the first information needs to be processed through a data plane, transmitting the first information to the second LTE through an inter-satellite channel.

In the embodiments of the present disclosure, the first LTE supports not only the T2T service but also a non-T2T service.

According to the embodiments of the present disclosure, when the first information of the first UE is received and it determines that the first UE supports the T2T service, the first information is transmitted to the second UE through the control plane channel or the inter-satellite channel. As a result, it is able to provide the beam T2T service in an LEO satellite communication system using a 5G satellite communication system, thereby to reduce a communication delay between the UEs and manage the service, e.g., mange the confidentiality of the service.

In addition, in order to improve the communication efficiency, the first UE may further transmit subscription information to the network device of the first satellite node and the network device of the core network, the subscription information is used to indicate a type of T2T service direct communication supported by the first UE, which may include user-level or session-level T2T, beam T2T.

Based on the above, the first LTE may further receive second information transmitted by the network device of the first satellite node, and the second information is used to indicate that the network device of the first satellite node supports a cell-level T2T service or a beam-level T2T service.

For a T2T LTE, due to the simplification of a service type, it is able to further reduce functions of a PDCP and an SDAP of the base station. When the PDCP and the SDAP of the base station are removed, PDCP and SDAP functions of the UE need to be designed equivalently in accordance with protocols of an opposite UE, wherein at least such functions as header compression and decompression using an Robust Header Compression (ROHC) protocol, ciphering and deciphering, and integrity protection and integrity verification in a PDCP functional entity need to be achieved between the UEs. Hence, a configuration of relevant parameters needs to be shared between the UEs, so as to transmit the data packet.

In addition, RLC of the first UE is in an UM, and/or a PDCP of the first LTE supports a reordering function and an on-demand delivery function of a logic channel in the UM for a high layer.

Hence, in order to ensure the communication, the first UE transmits third information to the second UE, and the third information is used to indicate at least one of a header compression and decompression method for the PDCP functional entity of the first UE, a ciphering and deciphering method, or an integrity protection and integrity verification method.

As shown in Fig. 6, the present disclosure further provides in some embodiments a communication method performed by a second UE, which includes: Step 601 of receiving first information of a first UE, the first information being transmitted by a network device of a first satellite node through a control plane channel or an inter-satellite channel when the network device of the first satellite node determines that the first UE supports a T2T service; and Step 602 of processing the first information.

In the embodiments of the present disclosure, RLC of the second LTE is in a UM; and/or a PDCP of the second UE supports a reordering function and an on-demand delivery function of a logic channel in the UM for a high layer. The second LTE supports not only the T2T service but also a non-T2T service.

In order to ensure the communication, the second UE receives third information of the first LTE, and the third information is used to indicate at least one of a ciphering and deciphering method, an integrity protection and integrity verification method, or a header compression and decompression method in a PDCP functional entity of the first UE.

In Step 602, the second UE processes the first information in accordance with the third information.

Based on the above, the first LTE may further receive second information transmitted by the network device of the first satellite node, and the second information is used to indicate that the network device of the first satellite node supports a cell-level T2T service or a beam-level T2T service.

Based on the above, when one T2T beam only supports one user, a beam T2T function is configured as follows.
(1) When one T2T beam only supports one user, a network configuration is provided as follows.

The network device of the core network determines a network device of a satellite node for providing the T2T beam (e.g., a satellite base station) in accordance with a position of a target user (e.g., the second UE) or a target region, so as to directly establish a tunnel between the network devices of the satellite nodes. Alternatively, a network device of a satellite node for a calling user determines a network device of a target satellite node (e.g., a satellite base station) in accordance with information about a coverage region of a target T2T beam (a called user is located under the target T2T beam), so as to directly establish an inter-satellite tunnel.

Optionally, the user subscription information about the UE includes a T2T type, so as to indicate a type of T2T service direct communication supported by the UE. To be specific, the subscription information includes user/session-level T2T, beam T2T.

The network device of the core network needs to configure a routing policy for the network device of the satellite node, so that the T2T service data of the UE is directly transmitted through the inter-satellite tunnel/path.

(2) When one T2T beam only supports a plurality of users, a network configuration is provided as follows.

The network device of the core network determines a network device of a satellite node for providing the T2T beam (e.g., a satellite base station) in accordance with a position of a target user (e.g., the second UE) or a target region, so as to directly establish a tunnel between the network devices of the satellite nodes. Alternatively, a network device of a satellite node for a calling user may determine a network device of a target satellite node (e.g., a satellite base station) in accordance with information about a coverage region of a target T2T beam (a called user is located under the target T2T beam), so as to directly establish an inter-satellite tunnel.

Optionally, the subscription information about the UE includes a T2T type, so as to indicate a type of T2T service direct communication supported by the UE. To be specific, the subscription information includes user/session-level T2T, beam T2T.

The network device of the core network needs to configure a routing policy for the network device of the satellite node, so that the T2T service data of the UE is directly transmitted through the inter-satellite tunnel/path.

The network device of the satellite node supports a user-level inter-satellite channel, and any two users communicate with each other through the T2T tunnel between the network devices of the satellite nodes. A tunnel ID assigned by the network device of the satellite node for the inter-satellite direct communication consists of a BS ID/IP address, and a per-UE tunnel ID.

The network device of the satellite node currently serving the UE forwards a data packet in accordance with a tunnel for the user.

The beam T2T inter-user direct communication includes both direct communication among a plurality of users under one beam, and direct communication among users under different beams.

Based on the above configuration, when the network device of the satellite node includes a complete base station function, and a UE under a beam A performs T2T communication with a UE under a beam B, control signaling of the UE under the beam A is identical to that for the non-T2T service, ant the transmission is from the network device of the satellite node where the beam A is located, to a ground gateway, to the core network, to another ground gateway, to the network device of the satellite node where the beam B is located, and to the UE under the beam B sequentially in that order. User plane data for the LTE under the beam A is processed by the network device of the satellite node where the beam A is located, and then directly transmitted to the network device of the satellite node where the beam B of the opposite UE is located through an inter-satellite link, and then the data is transmitted to the UE B under the beam B by the network device of the satellite node where the beam B is located.

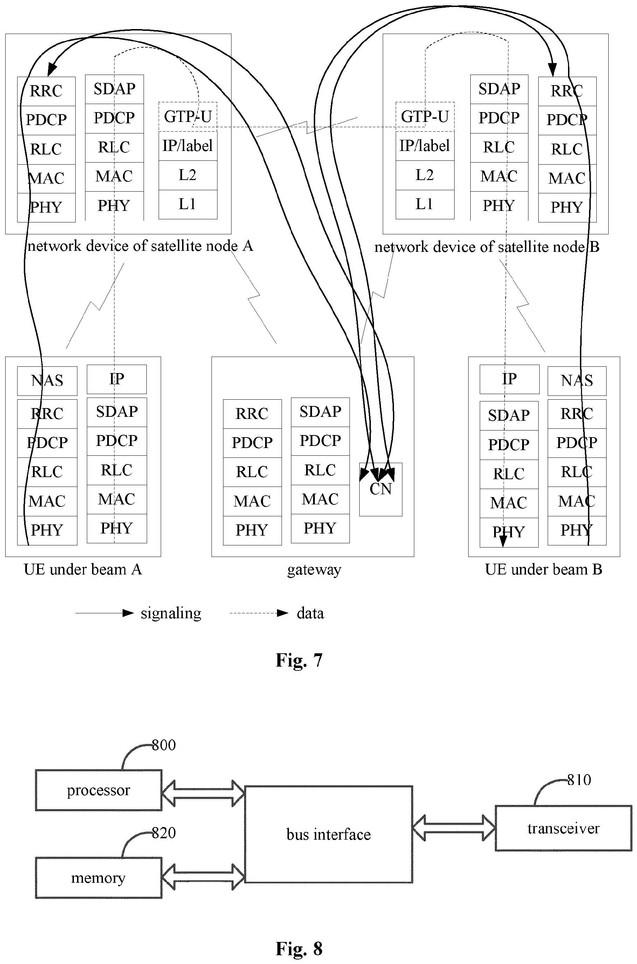

Fig. 7 shows a beam T2T protocol structure for the network device of the satellite node. The network device of the satellite node has a partial or complete control plane function, and a partial or complete user plane function.

For the beam T2T, the network device of the satellite node may only support a Distributed Unit (DU), and specifically it may include a protocol layer PHY/MAC/RLC.

When the LTE under the beam A performs the T2T communication with the UE under the beam B, the control signaling for the UE under the beam A is identical to that for the non-T2T service, and the transmission is from the network device of the satellite node where the beam A is located, to a ground gateway, to the core network, to another ground gateway, to the network device of the satellite node where the beam B is located, and then to the UE under the beam B sequentially in that order. User plane data for the UE under the beam A is processed by the DU of the network device of the satellite node where the beam A is located, and then directly transmitted to the DU of the network device of the satellite node where the beam B of the opposite UE is located through an inter-satellite link, and then the data is transmitted to the UE under the beam B by the network device of the satellite node where the beam B is located.

The DU of the network device of the satellite node needs to achieve an RLC Protocol Data Unit (PDU) data distribution function, and distribute a data stream to a corresponding unit in accordance with a type of the UE and a Radio Bearer (RB) attribute. In other words, the DU needs to have such functions as: (1) determining whether the LTE is a T2T LTE or a common LTE (a non-T2T LTE); (2) distributing Signaling Radio Bearer (SRB) data from the T2T UE to the network device of the core network, and distributing Data Radio Bearer (DRB) data from the T2T UE to the network device of the satellite node; and (3) mapping the received T2T DRB data to a bearer for a corresponding T2T UE.

According to the embodiments of the present disclosure, when the first information of the first UE is received and it determines that the first UE supports the T2T service, the first information is transmitted to the second LTE through the control plane channel or the inter-satellite channel. As a result, it is able to provide the beam T2T service in an LEO satellite communication system using a 5G satellite communication system, thereby to reduce a communication delay between the UEs and manage the service, e.g., mange the confidentiality of the service.

As shown in Fig. 8, the present disclosure further provides in some embodiments a communication device for a network device of a first satellite node, which includes: a processor 800 configured to read a computer program in a memory 820, so as to: receive first information transmitted by a first UE; and when determining that the first UE supports a T2T service, process the first information as follows: when the first information needs to be processed through a control plane, transmitting the first information to a second UE through a control plane channel, and when the first information needs to be processed through a data plane, transmitting the first information to the second UE through an inter-satellite channel; and a transceiver 810 configured to receive and transmit data under the control of the processor 800.

In Fig. 8, bus architecture may include a number of buses and bridges connected to each other, so as to connect various circuits for one or more processors 800 and one or more memories 820. In addition, as is known in the art, the bus architecture may be used to connect any other circuits, such as a circuit for a peripheral device, a circuit for a voltage stabilizer and a power management circuit. A bus interface may be provided, and the transceiver 810 may consist of a plurality of elements, i.e., a transmitter and a receiver for communication with any other devices over a transmission medium. The processor 800 may take charge of managing the bus architecture as well as general processings. The memory 820 may store therein data for the operation of the processor 800.

In an embodiment of the present disclosure, the processor 810 is a Central Processing Unit (CPU), an Application Specific Integrated Circuit (ASIC), a Field-Programmable Gate Array (FPGA) or a Complex Programmable Logic Device (CPLD). The processor may also use multi-core architecture.

The processor 800 may take charge of managing the bus architecture as well as general processings. The memory 820 may store therein data for the operation of the processor 800.

The processor 800 is further configured to read the computer program, so as to: obtain subscription information about the first UE, the subscription information being used to indicate a type of T2T service direct communication supported by the first UE; and determine whether the first UE supports the T2T service in accordance with the subscription information.

The processor 800 is further configured to read the computer program, so as to: receive information about the control plane channel transmitted by a network device of a core network; and transmit the first information to the network device of the core network in accordance with the information about the control plane channel, to enable the network device of the core network to transmit the first information to a network device of a second satellite node and enable the network device of the second satellite node to transmit the first information to the second LTE. The second LTE is located under a beam of the second satellite node.

The processor 800 is further configured to read the computer program, so as to: obtain a routing policy configured by a network device of a core network; determine an intermediate inter-satellite channel in accordance with the routing policy, the intermediate inter-satellite channel including the network device of the first satellite node, a network device of a target satellite node and a network device of a second satellite node, or including the network device of the first satellite node and the network device of the second satellite node, the second UE being located under a beam of the second satellite node; and transmit the first information to the second UE through the intermediate inter-satellite channel.

The processor 800 is further configured to read the computer program, so as to: establish an intermediate inter-satellite channel for the first UE in accordance with position information of the second UE; and transmit the first information to the second UE through the intermediate inter-satellite channel, the intermediate inter-satellite channel including the network device of the first satellite node, a network device of a target satellite node and a network device of a second satellite node, or including the network device of the first satellite node and the network device of the second satellite node, and the second LTE being located under a beam of the second satellite node.

The intermediate inter-satellite channel is a user-level inter-satellite channel or the intermediate inter-satellite channel is a beam-level inter-satellite channel.

The processor 800 is further configured to read the computer program, so as to transmit second information, and the second information is used to indicate that the network device of the first satellite node supports a cell-level T2T service or a beam-level T2T service.

A control plane protocol structure of the network device of the first satellite node includes any one of: a PHY, an MAC and RLC; the PHY, the MAC, the RLC and a PDCP; or the PHY, the MAC, the RLC, the PDCP, and RRC. A data plane protocol structure of the network device of the first satellite node includes any one of: the PHY, the MAC and the RLC; the PHY, the MAC, the RLC and the PDCP; or the PHY, the MAC, the RLC, the PDCP, and an SDAP.

It should be appreciated that, the communication device in the embodiments of the present disclosure is used to implement all the steps of the above-mentioned method with a same technical effect, which will not be particularly defined herein.

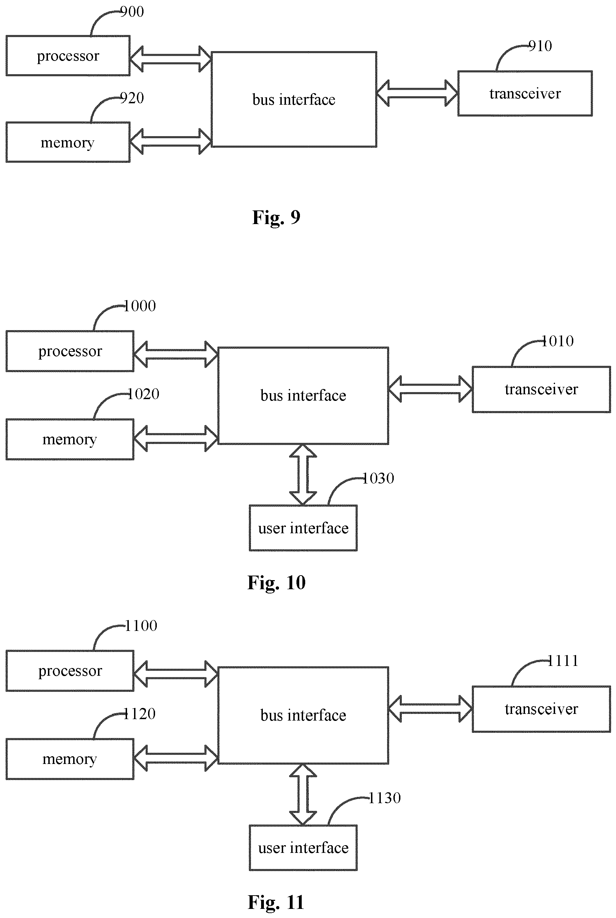

As shown in Fig. 9, the present disclosure further provides in some embodiments a communication device for a network device of a core network, which includes: a processor 900 configured to read a computer program in a memory 920, so as to: receive first information transmitted by a network device of a first satellite node, the first information being transmitted by the network device of the first satellite node to the network device of the core network when the network device of the first satellite node determining that a first UE supports a T2T service and the first information needs to be processed through a control plane; and transmit the first information to a second LTE; and a transceiver 910 configured to receive and transmit data under the control of the processor 900.

In Fig. 9, bus architecture may include a number of buses and bridges connected to each other, so as to connect various circuits for one or more processors 900 and one or more memories 920. In addition, as is known in the art, the bus architecture may be used to connect any other circuits, such as a circuit for a peripheral device, a circuit for a voltage stabilizer and a power management circuit. A bus interface may be provided, and the transceiver 910 may consist of a plurality of elements, i.e., a transmitter and a receiver for communication with any other devices over a transmission medium. The processor 900 may take charge of managing the bus architecture as well as general processings. The memory 920 may store therein data for the operation of the processor 900.

In an embodiment of the present disclosure, the processor 910 may be a CPU, an ASIC, an FPGA or a CPLD. The processor may also use multi-core architecture.

The processor 900 may take charge of managing the bus architecture as well as general processings. The memory 920 may store therein data for the operation of the processor 900.

The processor 900 is further configured to read the computer program, so as to perform one or more of: receiving subscription information transmitted by the first UE, the subscription information being used to indicate a type of T2T service direct communication supported by the first LTE; transmitting information about a control plane channel to the network device of the first satellite node and the first UE; and transmitting a routing policy to the network device of the first satellite node.

It should be appreciated that, the communication device in the embodiments of the present disclosure is used to implement all the steps of the above-mentioned method with a same technical effect, which will not be particularly defined herein.

As shown in Fig. 10, the present disclosure further provides in some embodiments a communication device for a first LTE, which includes: a processor 1000 configured to read a computer program in a memory 1020, so as to transmit first information to a network device of a first satellite node, the first information being used to enable the network device of the first satellite node to process the first information as follows when the network device of the first satellite node determines that the first LTE supports a T2T service: when the first information needs to be processed through a control plane, transmitting the first information to a second UE through a control plane channel; and when the first information needs to be processed through a data plane, transmitting the first information to the second UE through an inter-satellite channel; and a transceiver 1010 configured to receive and transmit data under the control of the processor 1000.

In Fig. 10, bus architecture may include a number of buses and bridges connected to each other, so as to connect various circuits for one or more processors 1000 and one or more memories 1020. In addition, as is known in the art, the bus architecture may be used to connect any other circuits, such as a circuit for a peripheral device, a circuit for a voltage stabilizer and a power management circuit. A bus interface may be provided, and the transceiver 1010 may consist of a plurality of elements, i.e., a transmitter and a receiver for communication with any other devices over a transmission medium. With respect to different UEs, a user interface 1030 may also be provided for devices which are to be arranged inside or outside the UE, and these devices may include but not limited to a keypad, a display, a speaker, a microphone and a joystick.

The processor 1000 may take charge of managing the bus architecture as well as general processings. The memory 1020 may store therein data for the operation of the processor 1000.

In an embodiment of the present disclosure, the processor 1000 may be a CPU, an ASIC, an FPGA or a CPLD. The processor may also use multi-core architecture.

The processor 1000 is further configured to read the computer program, so as to transmit subscription information to the network device of the first satellite node and a network device of a core network, and the subscription information is used to indicate a type of T2T service direct communication supported by the first UE.

The processor 1000 is further configured to read the computer program, so as to receive second information transmitted by the network device of the first satellite node, and the second information is used to indicate that the network device of the first satellite node supports a cell-level T2T service or a beam-level T2T service.

The processor 1000 is further configured to read the computer program, so as to transmit third information to the second UE, and the third information is used to indicate at least one of a ciphering and deciphering method, an integrity protection and integrity verification method, or a header compression and decompression method in a PDCP functional entity of the first UE.

RLC of the first LTE is in a UM; and/or a PDCP of the first UE supports a reordering function and an on-demand delivery function of a logic channel in the UM for a high layer.

It should be appreciated that, the communication device in the embodiments of the present disclosure is used to implement all the steps of the above-mentioned method with a same technical effect, which will not be particularly defined herein.

As shown in Fig. 11, the present disclosure further provides in some embodiments a communication device for a first LTE, which includes: a processor 1100 configured to read a computer program in a memory 1120, so as to: receive first information transmitted by a first UE, the first information being transmitted by a network device of a first satellite node through a control plane channel or an inter-satellite channel when the network device of the first satellite node determines that the first UE supports a T2T service; and process the first information; and a transceiver 1111 configured to receive and transmit data under the control of the processor 1100.

In Fig. 11, bus architecture may include a number of buses and bridges connected to each other, so as to connect various circuits for one or more processors 1100 and one or more memories 1120. In addition, as is known in the art, the bus architecture may be used to connect any other circuits, such as a circuit for a peripheral device, a circuit for a voltage stabilizer and a power management circuit. A bus interface may be provided, and the transceiver 1111 may consist of a plurality of elements, i.e., a transmitter and a receiver for communication with any other devices over a transmission medium. With respect to different UEs, a user interface 1130 may also be provided for devices which are to be arranged inside or outside the UE, and these devices may include but not limited to a keypad, a display, a speaker, a microphone and a joystick.

The processor 1100 may take charge of managing the bus architecture as well as general processings. The memory 1120 may store therein data for the operation of the processor 1100.

In an embodiment of the present disclosure, the processor 1100 may be a CPU, an ASIC, an FPGA or a CPLD. The processor may also use multi-core architecture.

The processor 1100 is further configured to read the computer program, so as to receive third information transmitted of the first UE, and the third information is used to indicate at least one of a ciphering and deciphering method, an integrity protection and integrity verification method, or a header compression and decompression method in a PDCP functional entity of the first UE.

The processor 1100 is further configured to read the computer program, so as to process the first information in accordance with the third information.

RLC of the second LTE is in a UM; and/or a PDCP of the second LTE supports a reordering function and an on-demand delivery function of a logic channel in the UM for a high layer.

It should be appreciated that, the communication device in the embodiments of the present disclosure is used to implement all the steps of the above-mentioned method with a same technical effect, which will not be particularly defined herein.

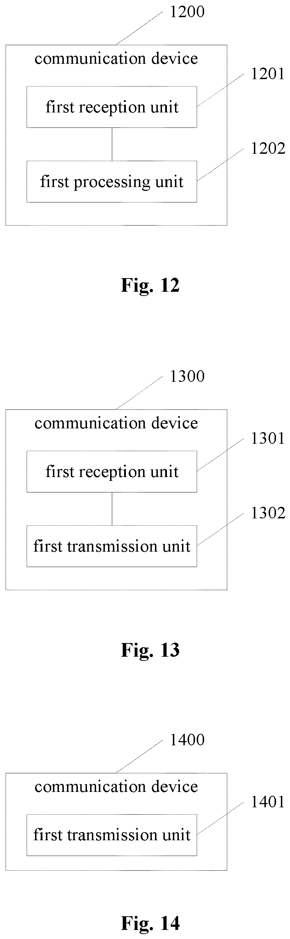

As shown in Fig. 12, the present disclosure further provides in some embodiments a communication device for a network device of a first satellite node, which includes: a first reception unit 1201 configured to receive first information transmitted by a first UE; and a first processing unit 1202 configured to, when determining that the first LTE supports a T2T service, process the first information as follows: when the first information needs to be processed through a control plane, transmitting the first information to a second UE through a control plane channel; and when the first information needs to be processed through a data plane, transmitting the first information to the second UE through an inter-satellite channel.

Optionally, the communication device further includes: a first obtaining unit configured to obtain subscription information about the first LTE, the subscription information being used to indicate a type of T2T service direct communication supported by the first UE; and a first determination unit configured to determine whether the first LTE supports the T2T service in accordance with the subscription information.

Optionally, the first processing unit includes: a first reception sub-module configured to receive information about the control plane channel transmitted by a network device of a core network; and a first processing sub-module configured to transmit the first information to the network device of the core network in accordance with the information about the control plane channel, to enable the network device of the core network to transmit the first information to a network device of a second satellite node and enable the network device of the second satellite node to transmit the first information to the second UE. The second UE is located under a beam of the second satellite node.

Optionally, the first processing unit includes: a first obtaining sub-module configured to obtain a routing policy configured by a network device of a core network; a first determination sub-module configured to determine an intermediate inter-satellite channel in accordance with the routing policy, the intermediate inter-satellite channel including the network device of the first satellite node, a network device of a target satellite node and a network device of a second satellite node, or including the network device of the first satellite node and the network device of the second satellite node, the second UE being located under a beam of the second satellite node; and a first transmission sub-module configured to transmit the first information to the second UE through the intermediate inter-satellite channel.

Optionally, the first processing unit includes: a first establishment sub-module configured to establish an intermediate inter-satellite channel for the first UE in accordance with position information of the second LTE; and a second transmission sub-module configured to transmit the first information to the second UE through the intermediate inter-satellite channel, the intermediate inter-satellite channel including the network device of the first satellite node, a network device of a target satellite node and a network device of a second satellite node, or including the network device of the first satellite node and the network device of the second satellite node, and the second UE being located under a beam of the second satellite node.

Optionally, the intermediate inter-satellite channel is a user-level inter-satellite channel or the intermediate inter-satellite channel is a beam-level inter-satellite channel.

Optionally, the communication device further includes a first transmission unit configured to transmit second information, and the second information is used to indicate that the network device of the first satellite node supports a cell-level T2T service or a beam-level T2T service.

Optionally, a control plane protocol structure of the network device of the first satellite node includes any one of a PHY, an MAC and RLC; the PHY, the MAC, the RLC and a PDCP; or the PHY, the MAC, the RLC, the PDCP, and RRC. A data plane protocol structure of the network device of the first satellite node includes any one of the PHY, the MAC and the RLC; the PHY, the MAC, the RLC and the PDCP; or the PHY, the MAC, the RLC, the PDCP, and an SDAP.

It should be appreciated that, the communication device in the embodiments of the present disclosure is used to implement all the steps of the above-mentioned method with a same technical effect, which will not be particularly defined herein.

As shown in Fig. 13, the present disclosure further provides in some embodiments a communication device for a network device of a core network, which includes: a first reception unit 1301 configured to receive first information transmitted by a network device of a first satellite node, the first information being transmitted by the network device of the first satellite node to the network device of the core network when the network device of the first satellite node determining that a first LTE supports a T2T service and the first information needs to be processed through a control plane; and a first transmission unit 1302 configured to transmit the first information to a second LTE.

Optionally, the communication device further includes at least one of: a second reception unit configured to receive subscription information transmitted by the first UE, the subscription information being used to indicate a type of T2T service direct communication supported by the first LTE; a second transmission unit configured to transmit information about a control plane channel to the network device of the first satellite node and the first LTE; and a third transmission unit configured to transmit a routing policy to the network device of the first satellite node.

It should be appreciated that, the communication device in the embodiments of the present disclosure is used to implement all the steps of the above-mentioned method with a same technical effect, which will not be particularly defined herein.

As shown in Fig. 14, the present disclosure further provides in some embodiments a communication device for a first LTE, which includes a first transmission unit 1401 configured to transmit first information to a network device of a first satellite node, the first information being used to enable the network device of the first satellite node to process the first information as follows when the network device of the first satellite node determines that the first UE supports a T2T service: when the first information needs to be processed through a control plane, transmitting the first information to a second UE through a control plane channel; and when the first information needs to be processed through a data plane, transmitting the first information to the second UE through an inter-satellite channel.

Optionally, the communication device further includes a second transmission unit configured to transmit subscription information to the network device of the first satellite node and a network device of a core network, and the subscription information is used to indicate a type of T2T service direct communication supported by the first UE.

Optionally, the communication device further includes a first reception unit configured to receive second information transmitted by the network device of the first satellite node, and the second information is used to indicate that the network device of the first satellite node supports a cell-level T2T service or a beam-level T2T service.

Optionally, the communication device further includes a third transmission unit configured to transmit third information to the second UE, and the third information is used to indicate at least one of a ciphering and deciphering method, an integrity protection and integrity verification method, or a header compression and decompression method in a PDCP functional entity of the first UE.

In an embodiment of the present disclosure, RLC of the first UE is in a UM; and/or a PDCP of the first UE supports a reordering function and an on-demand delivery function of a logic channel in the UM for a high layer.

It should be appreciated that, the communication device in the embodiments of the present disclosure is used to implement all the steps of the above-mentioned method with a same technical effect, which will not be particularly defined herein.

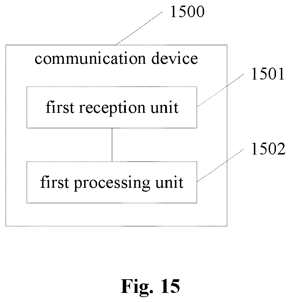

As shown in Fig. 15, the present disclosure further provides in some embodiments a communication device for a second UE, which includes: a first reception unit 1501 configured to receive first information of a first UE, the first information being transmitted by a network device of a first satellite node through a control plane channel or an inter-satellite channel when the network device of the first satellite node determines that the first UE supports a T2T service; and a first processing unit 1502 configured to process the first information.

Optionally, the communication device further includes a second reception unit configured to receive third information of the first UE, and the third information is used to indicate at least one of a ciphering and deciphering method, an integrity protection and integrity verification method, or a header compression and decompression method in a PDCP functional entity of the first UE.

Optionally, the first processing unit is configured to process the first information in accordance with the third information.

In an embodiment of the present disclosure, RLC of the second LTE is in a UM; and/or a PDCP of the second LTE supports a reordering function and an on-demand delivery function of a logic channel in the UM for a high layer.

It should be appreciated that, the communication device in the embodiments of the present disclosure is used to implement all the steps of the above-mentioned method with a same technical effect, which will not be particularly defined herein.

It should be further appreciated that, the units in the embodiments of the present disclosure are for illustrative purposes, and they are provided only on the basis of their logic functions. The units may be integrated in a processing unit, or physically separated from each other, or two or more units may be integrated in one unit. The integrated units may be implemented in the form of hardware or a software functional unit.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) or a processor to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

The present disclosure further provides in some embodiments a processor-readable storage medium storing therein a computer program. The computer program is used to be performed by a processor to implement the above-mentioned communication method.

The processor-readable storage medium may be any available medium or data storage device capable of being accessed by a processor, which includes, but not limited to, a magnetic memory (e.g., floppy disk, hard disk, magnetic tape, or Magnetic Optical disk (MO)), an optical memory (e.g., Compact Disk (CD), Digital Video Disk (DVD), Blue-ray Disk (BD), or High-definition Versatile Disk (HVD)), or a semiconductor memory (e.g., ROM, Electrically Programmable ROM (EPROM), Electrically Erasable PROM (EEPROM), NAND flash, or Solid-State Disk (SSD)).

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to a disk memory and an optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being performed by the processor of the computer or the other programmable data processing devices may create a device to achieve the functions assigned in one or more work flows in the flow chart and/or one or more blocks in the block diagram.

These processor executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should be further appreciated that, the above modules are divided only on the basis of their logic functions, and in actual use, they may be completely or partially integrated into a physical entity, or physically separated from each other. These modules may be implemented by calling software through a processing element, or implemented in the form of hardware. For example, the determination module may be a processing element arranged separately, or integrated into a chip of the above-mentioned device. In addition, this module may be stored in the memory of the above-mentioned device in the form of a program code, and may be called and performed by a processing element of the above-mentioned device so as to achieve the above functions. The other modules may be implemented in a similar manner. All or parts of the modules may be integrated together or arranged separately. Here, the modules, units or assemblies may each of an Integrated Circuit (IC) having a signal processing capability. During the implementation, the steps of the method or the modules may be implemented through an integrated logic circuit of the processing element in the form of hardware or through instructions in the form of software.

For example, the above modules may be one or more ICs capable of implementing the above-mentioned method, e.g., one or more Application Specific Integrated Circuits (ASICs), one or more Digital Signal Processors (DSPs), or one or more Field Programmable Gate Array (FPGA). For another example, when a certain module is implemented by calling a program code through a processing element, the processing element may be a general-purpose processor, e.g., a Central Processing Unit (CPU) or any other processor capable of calling the program code. These modules may be integrated together and implemented in the form of system-on-a-chip (SOC).

Such words as "first" and "second" involved in the specification and the appended claims are only used to differentiate different objects rather than to represent any specific order. It should be appreciated that, the data used in this way may be replaced with each other, so as to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device. In addition, the expression "and/or" in the description and the appended claims is only used to represent at least one of the objects before and after the expression. For example, "A and/or B and/or C" represents seven situations, i.e., there is only A, there is only B, there is only C, there are both A and B, there are both B and C, thereby are both A and C, and there are A, B and C. Similarly, the phrase "at least one of A and B" in the specification and the appended claims shall be understood as "there is only A, there is only B, or there are both A and B".

The embodiments of the present disclosure have been described above in conjunction with the drawings, but the present disclosure is not limited thereto. The above-mentioned specific implementations are only illustrative and not restrictive. Under the inspiration of the present disclosure, many forms can be made without departing from the principle of the present disclosure and the protection scope of the claims, all of which fall within the protection of the present disclosure.

## Claims

1. A communication method performed by a network device of a first satellite node, comprising:
receiving first information transmitted by a first User Equipment (UE);
when determining that the first UE supports a Terminal to Terminal (T2T) service, processing the first information as follows:
when the first information needs to be processed through a control plane, transmitting the first information to a second UE through a control plane channel;
when the first information needs to be processed through a data plane, transmitting the first information to the second UE through an inter-satellite channel.

2. The communication method according to claim 1, wherein prior to processing the first information, the communication method further comprises:
obtaining subscription information about the first UE, the subscription information being used to indicate a type of T2T service direct communication supported by the first UE;
determining whether the first UE supports the T2T service in accordance with the subscription information.

3. The communication method according to claim 1, wherein the transmitting the first information to the second UE through the control plane channel when the first information needs to be processed through the control plane comprises:
receiving information about the control plane channel transmitted by a network device of a core network;
transmitting the first information to the network device of the core network in accordance with the information about the control plane channel, to enable the network device of the core network to transmit the first information to a network device of a second satellite node and enable the network device of the second satellite node to transmit the first information to the second UE, wherein the second UE is located under a beam of the second satellite node.

4. The communication method according to claim 1, wherein the transmitting the first information to the second UE through the inter-satellite channel when the first information needs to be processed through the data plane comprises:
obtaining a routing policy configured by a network device of a core network;
determining an intermediate inter-satellite channel in accordance with the routing policy, the intermediate inter-satellite channel comprising the network device of the first satellite node, a network device of a target satellite node and a network device of a second satellite node, or the intermediate inter-satellite channel comprising the network device of the first satellite node and the network device of the second satellite node, the second UE being located under a beam of the second satellite node;
transmitting the first information to the second UE through the intermediate inter-satellite channel.

5. The communication method according to claim 1, wherein the transmitting the first information to the second UE through the inter-satellite channel when the first information needs to be processed through the data plane comprises:
establishing an intermediate inter-satellite channel for the first UE in accordance with position information of the second LTE;
transmitting the first information to the second UE through the intermediate inter-satellite channel, the intermediate inter-satellite channel comprising the network device of the first satellite node, a network device of a target satellite node and a network device of a second satellite node, or the intermediate inter-satellite channel comprising the network device of the first satellite node and the network device of the second satellite node, and the second LTE being located under a beam of the second satellite node.

6. The communication method according to claim 5, wherein the intermediate inter-satellite channel is a user-level inter-satellite channel or the intermediate inter-satellite channel is a beam-level inter-satellite channel.

7. The communication method according to claim 1, further comprising:
transmitting second information, wherein the second information is used to indicate that the network device of the first satellite node supports a cell-level T2T service or a beam-level T2T service.

8. The communication method according to claim 1, wherein a control plane protocol structure of the network device of the first satellite node comprises any one of
a Physical layer (PHY), a Medium Access Control (MAC) and Radio Link Control (RLC);
the PHY, the MAC, the RLC and a Packet Data Convergence Protocol (PDCP); or
the PHY, the MAC, the RLC, the PDCP, and Radio Resource Control (RRC),
wherein a data plane protocol structure of the network device of the first satellite node comprises any one of:
the PHY, the MAC and the RLC;
the PHY, the MAC, the RLC and the PDCP; or
the PHY, the MAC, the RLC, the PDCP, and a Service Data Adaptation Protocol (SDAP).

9. A communication method performed by a network device of a core network, comprising:
receiving first information transmitted by a network device of a first satellite node, the first information being transmitted by the network device of the first satellite node to the network device of the core network when the network device of the first satellite node determining that a first UE supports a T2T service and the first information needs to be processed through a control plane;
transmitting the first information to a second LTE.

10. The communication method according to claim 9, further comprising one or more of
receiving subscription information transmitted by the first UE, the subscription information being used to indicate a type of T2T service direct communication supported by the first UE;
transmitting information about a control plane channel to the network device of the first satellite node and the first UE;
transmitting a routing policy to the network device of the first satellite node.

11. A communication method performed by a first LTE, comprising:
transmitting first information to a network device of a first satellite node, the first information being used to enable the network device of the first satellite node to process the first information as follows when the network device of the first satellite node determines that the first UE supports a T2T service:
when the first information needs to be processed through a control plane, transmitting the first information to a second UE through a control plane channel; and when the first information needs to be processed through a data plane, transmitting the first information to the second UE through an inter-satellite channel.

12. The communication method according to claim 11, further comprising:
transmitting subscription information to the network device of the first satellite node and a network device of a core network, the subscription information being used to indicate a type of T2T service direct communication supported by the first UE.

13. The communication method according to claim 11, further comprising:
receiving second information transmitted by the network device of the first satellite node, and the second information being used to indicate that the network device of the first satellite node supports a cell-level T2T service or a beam-level T2T service.

14. The communication method according to claim 11, further comprising:
transmitting third information to the second UE, and the third information being used to indicate at least one of
a ciphering and deciphering method, an integrity protection and integrity verification method, or a header compression and decompression method in a PDCP functional entity of the first UE.

15. The communication method according to claim 11, wherein
RLC of the first LTE is in an Unacknowledged Mode (UM); and/or
a PDCP of the first UE supports a reordering function and an on-demand delivery function of a logic channel in the UM for a high layer.

16. A communication method performed by a second UE, comprising:
receiving first information of a first UE, the first information being transmitted by a network device of a first satellite node through a control plane channel or an inter-satellite channel when the network device of the first satellite node determines that the first UE supports a T2T service;
processing the first information.

17. The communication method according to claim 16, further comprising:
receiving third information of the first UE, wherein the third information is used to indicate at least one of:
a ciphering and deciphering method, an integrity protection and integrity verification method, or a header compression and decompression method in a PDCP functional entity of the first UE.

18. The communication method according to claim 17, wherein the processing the first information comprises:
processing the first information in accordance with the third information.

19. The communication method according to claim 16, wherein
RLC of the second UE is in a UM; and/or
a PDCP of the second UE supports a reordering function and an on-demand delivery function of a logic channel in the UM for a high layer.

20. A communication device for a network device of a first satellite node, comprising a memory, a transceiver and a processor,
wherein the memory is configured to store therein a computer program, the transceiver is configured to receive and transmit data under the control of the processor, and the processor is configured to read the computer program in the memory to:
receive first information transmitted by a first UE;
when determining that the first UE supports a T2T service, process the first information as follows:
when the first information needs to be processed through a control plane, transmitting the first information to a second UE through a control plane channel; when the first information needs to be processed through a data plane, transmitting the first information to the second UE through an inter-satellite channel.

21. The communication device according to claim 20, wherein the processor is further configured to:
obtain subscription information about the first UE, the subscription information being used to indicate a type of T2T service direct communication supported by the first UE;
determine whether the first UE supports the T2T service in accordance with the subscription information.

22. The communication device according to claim 20, wherein the processor is further configured to:
receive information about the control plane channel transmitted by a network device of a core network;
transmit the first information to the network device of the core network in accordance with the information about the control plane channel, to enable the network device of the core network to transmit the first information to a network device of a second satellite node and enable the network device of the second satellite node to transmit the first information to the second UE, wherein the second UE is located under a beam of the second satellite node.

23. The communication device according to claim 20, wherein the processor is further configured to:
obtain a routing policy configured by a network device of a core network;
determine an intermediate inter-satellite channel in accordance with the routing policy, the intermediate inter-satellite channel comprising the network device of the first satellite node, a network device of a target satellite node and a network device of a second satellite node, or the intermediate inter-satellite channel comprising the network device of the first satellite node and the network device of the second satellite node, the second UE being located under a beam of the second satellite node;
transmit the first information to the second UE through the intermediate inter-satellite channel.

24. The communication device according to claim 20, wherein the processor is further configured to:
establish an intermediate inter-satellite channel for the first UE in accordance with position information of the second LTE;
transmit the first information to the second UE through the intermediate inter-satellite channel, the intermediate inter-satellite channel comprising the network device of the first satellite node, a network device of a target satellite node and a network device of a second satellite node, or the intermediate inter-satellite channel comprising the network device of the first satellite node and the network device of the second satellite node, and the second UE being located under a beam of the second satellite node.

25. The communication device according to claim 24, wherein the intermediate inter-satellite channel is a user-level inter-satellite channel or the intermediate inter-satellite channel is a beam-level inter-satellite channel.

26. The communication device according to claim 20, wherein the processor is further configured to:
transmit second information, wherein the second information is used to indicate that the network device of the first satellite node supports a cell-level T2T service or a beam-level T2T service.

27. The communication device according to claim 20, wherein a control plane protocol structure of the network device of the first satellite node comprises any one of
a PHY, an MAC and RLC;
the PHY, the MAC, the RLC and a PDCP; or
the PHY, the MAC, the RLC, the PDCP, and RRC,
wherein a data plane protocol structure of the network device of the first satellite node comprises any one of:
the PHY, the MAC and the RLC;
the PHY, the MAC, the RLC and the PDCP; or
the PHY, the MAC, the RLC, the PDCP, and an SDAP.

28. A communication device for a network device of a core network, comprising a memory, a transceiver and a processor,
wherein the memory is configured to store therein a computer program, the transceiver is configured to receive and transmit data under the control of the processor, and the processor is configured to read the computer program in the memory to:
receive first information transmitted by a network device of a first satellite node, the first information being transmitted by the network device of the first satellite node to the network device of the core network when the network device of the first satellite node determining that a first UE supports a T2T service and the first information needs to be processed through a control plane;
transmit the first information to a second LTE.

29. The communication device according to claim 28, wherein the processor is further configure to perform one or more of:
receiving subscription information transmitted by the first LTE, the subscription information being used to indicate a type of T2T service direct communication supported by the first UE;
transmitting information about a control plane channel to the network device of the first satellite node and the first UE;
transmitting a routing policy to the network device of the first satellite node.

30. A communication device for a first UE, comprising a memory, a transceiver and a processor,
wherein the memory is configured to store therein a computer program, the transceiver is configured to receive and transmit data under the control of the processor, and the processor is configured to read the computer program in the memory to:
transmit first information to a network device of a first satellite node, the first information being used to enable the network device of the first satellite node to process the first information as follows when the network device of the first satellite node determines that the first UE supports a T2T service:
when the first information needs to be processed through a control plane, transmitting the first information to a second UE through a control plane channel; and when the first information needs to be processed through a data plane, transmitting the first information to the second UE through an inter-satellite channel.

31. The communication device according to claim 30, wherein the processor is further configured to:
transmit subscription information to the network device of the first satellite node and a network device of a core network, wherein the subscription information is used to indicate a type of T2T service direct communication supported by the first UE.

32. The communication device according to claim 30, wherein the processor is further configured to:
receive second information transmitted by the network device of the first satellite node, wherein the second information is used to indicate that the network device of the first satellite node supports a cell-level T2T service or a beam-level T2T service.

33. The communication device according to claim 30, wherein the processor is further configured to:
transmit third information to the second LTE, wherein the third information is used to indicate at least one of:
a ciphering and deciphering method, an integrity protection and integrity verification method, or a header compression and decompression method in a PDCP functional entity of the first UE.

34. The communication device according to claim 30, wherein
RLC of the first LTE is in a UM; and/or
a PDCP of the first UE supports a reordering function and an on-demand delivery function of a logic channel in the UM for a high layer.

35. A communication device for a second LTE, comprising a memory, a transceiver and a processor,
wherein the memory is configured to store therein a computer program, the transceiver is configured to receive and transmit data under the control of the processor, and the processor is configured to read the computer program in the memory to:
receive first information of a first LTE, wherein the first information is transmitted by a network device of a first satellite node through a control plane channel or an inter-satellite channel when the network device of the first satellite node determines that the first UE supports a T2T service;
process the first information.

36. The communication device according to claim 35, wherein the processor is further configured to:
receive third information of the first UE, wherein the third information is used to indicate at least one of:
a ciphering and deciphering method, an integrity protection and integrity verification method, or a header compression and decompression method in a PDCP functional entity of the first UE.

37. The communication device according to claim 36, wherein the processor is further configured to:
process the first information in accordance with the third information.

38. The communication device according to claim 35, wherein
RLC of the second UE is in a UM; and/or
a PDCP of the second UE supports a reordering function and an on-demand delivery function of a logic channel in the UM for a high layer.

39. A communication device for a network device of a first satellite node, comprising:
a first reception unit configured to receive first information transmitted by a first UE; and
a first processing unit configured to, when determining that the first LTE supports a T2T service, process the first information as follows:
when the first information needs to be processed through a control plane, transmitting the first information to a second UE through a control plane channel; when the first information needs to be processed through a data plane, transmitting the first information to the second UE through an inter-satellite channel.

40. The communication device according to claim 39, further comprising:
a first obtaining unit configured to obtain subscription information about the first UE, the subscription information being used to indicate a type of T2T service direct communication supported by the first UE;
a first determination unit configured to determine whether the first LTE supports the T2T service in accordance with the subscription information.

41. The communication device according to claim 39, wherein the first processing unit comprises:
a first reception sub-module configured to receive information about the control plane channel transmitted by a network device of a core network;
a first processing sub-module configured to transmit the first information to the network device of the core network in accordance with the information about the control plane channel, to enable the network device of the core network to transmit the first information to a network device of a second satellite node and enable the network device of the second satellite node to transmit the first information to the second LTE, wherein the second UE is located under a beam of the second satellite node.

42. The communication device according to claim 39, wherein the first processing unit comprises:
a first obtaining sub-module configured to obtain a routing policy configured by a network device of a core network;
a first determination sub-module configured to determine an intermediate inter-satellite channel in accordance with the routing policy, the intermediate inter-satellite channel comprising the network device of the first satellite node, a network device of a target satellite node and a network device of a second satellite node, or the intermediate inter-satellite channel comprising the network device of the first satellite node and the network device of the second satellite node, the second UE being located under a beam of the second satellite node;
a first transmission sub-module configured to transmit the first information to the second UE through the intermediate inter-satellite channel.

43. The communication device according to claim 39, wherein the first processing unit comprises:
a first establishment sub-module configured to establish an intermediate inter-satellite channel for the first UE in accordance with position information of the second UE;
a second transmission sub-module configured to transmit the first information to the second UE through the intermediate inter-satellite channel, the intermediate inter-satellite channel comprising the network device of the first satellite node, a network device of a target satellite node and a network device of a second satellite node, or the intermediate inter-satellite channel comprising the network device of the first satellite node and the network device of the second satellite node, and the second UE being located under a beam of the second satellite node.

44. The communication device according to claim 43, wherein the intermediate inter-satellite channel is a user-level inter-satellite channel or the intermediate inter-satellite channel is a beam-level inter-satellite channel.

45. The communication device according to claim 39, further comprising:
a first transmission unit configured to transmit second information, wherein the second information is used to indicate that the network device of the first satellite node supports a cell-level T2T service or a beam-level T2T service.

46. The communication device according to claim 39, wherein a control plane protocol structure of the network device of the first satellite node comprises any one of:
a PHY, an MAC and RLC;
the PHY, the MAC, the RLC and a PDCP; or
the PHY, the MAC, the RLC, the PDCP, and RRC,
wherein a data plane protocol structure of the network device of the first satellite node comprises any one of:
the PHY, the MAC and the RLC;
the PHY, the MAC, the RLC and the PDCP; or
the PHY, the MAC, the RLC, the PDCP, and an SDAP.

47. A communication device for a network device of a core network, comprising:
a first reception unit configured to receive first information transmitted by a network device of a first satellite node, the first information being transmitted by the network device of the first satellite node to the network device of the core network when the network device of the first satellite node determining that a first LTE supports a T2T service and the first information needs to be processed through a control plane;
a first transmission unit configured to transmit the first information to a second UE.

48. The communication device according to claim 47, further comprising at least one of:
a second reception unit configured to receive subscription information transmitted by the first UE, the subscription information being used to indicate a type of T2T service direct communication supported by the first UE;
a second transmission unit configured to transmit information about a control plane channel to the network device of the first satellite node and the first UE;
a third transmission unit configured to transmit a routing policy to the network device of the first satellite node.

49. A communication device for a first UE, comprising:
a first transmission unit configured to transmit first information to a network device of a first satellite node, the first information being used to enable the network device of the first satellite node to process the first information as follows when the network device of the first satellite node determines that the first LTE supports a T2T service:
when the first information needs to be processed through a control plane, transmitting the first information to a second UE through a control plane channel; and when the first information needs to be processed through a data plane, transmitting the first information to the second UE through an inter-satellite channel.

50. The communication device according to claim 49, further comprising:
a second transmission unit configured to transmit subscription information to the network device of the first satellite node and a network device of a core network, wherein the subscription information is used to indicate a type of T2T service direct communication supported by the first UE.

51. The communication device according to claim 49, further comprising:
a first reception unit configured to receive second information transmitted by the network device of the first satellite node, wherein the second information is used to indicate that the network device of the first satellite node supports a cell-level T2T service or a beam-level T2T service.

52. The communication device according to claim 49, further comprising:
a third transmission unit configured to transmit third information to the second LTE, wherein the third information is used to indicate at least one of:
a ciphering and deciphering method, an integrity protection and integrity verification method, or a header compression and decompression method in a PDCP functional entity of the first UE.

53. The communication device according to claim 49, wherein
RLC of the first LTE is in a UM; and/or
a PDCP of the first UE supports a reordering function and an on-demand delivery function of a logic channel in the UM for a high layer.

54. A communication device for a second LTE, comprising:
a first reception unit configured to receive first information of a first UE, the first information being transmitted by a network device of a first satellite node through a control plane channel or an inter-satellite channel when the network device of the first satellite node determines that the first UE supports a T2T service;
a first processing unit configured to process the first information.

55. The communication device according to claim 54, further comprising:
a second reception unit configured to receive third information of the first UE, wherein the third information is used to indicate at least one of:
a ciphering and deciphering method, an integrity protection and integrity verification method, or a header compression and decompression method in a PDCP functional entity of the first UE.

56. The communication device according to claim 55, wherein the first processing unit is configured to process the first information in accordance with the third information.

57. The communication device according to claim 54, wherein
RLC of the second LTE is in a UM; and/or
a PDCP of the second UE supports a reordering function and an on-demand delivery function of a logic channel in the UM for a high layer.

58. A processor-readable storage medium storing therein a computer program, wherein the computer program is used to be performed by a processor to implement the communication method according to any one of claims 1 to 19.
